(19) Europäisches Patentamt
European Patent Office
Office européen des brevets

(11) Veröffentlichungsnummer: **0 264 841 B1**

(12) **EUROPÄISCHE PATENTSCHRIFT**

(45) Veröffentlichungstag der Patentschrift: **30.12.92**

(51) Int. Cl.$^5$: **C08F 8/00**, C08F 8/14, C08F 8/30, C08G 81/02, C10G 33/04

(21) Anmeldenummer: **87115126.2**

(22) Anmeldetag: **16.10.87**

Die Akte enthält technische Angaben, die nach dem Eingang der Anmeldung eingereicht wurden und die nicht in dieser Patentschrift enthalten sind.

(54) **Copolymerisate aus hydrophoben Acrylsäure-, bzw. Methacrylsäureestern und hydrophilen Comonomeren, Verfahren zu ihrer Herstellung und ihre Verwendung als Erölemulsionsspalter.**

(30) Priorität: **18.10.86 DE 3635489**

(43) Veröffentlichungstag der Anmeldung: **27.04.88 Patentblatt 88/17**

(45) Bekanntmachung des Hinweises auf die Patenterteilung: **30.12.92 Patentblatt 92/53**

(84) Benannte Vertragsstaaten: **DE FR GB IT NL**

(56) Entgegenhaltungen:
**DE-C- 3 338 923**
**FR-A- 2 007 379**
**US-A- 3 277 157**
**US-A- 4 141 854**
**US-A- 4 230 844**

**CHEMICAL ABSTRACTS, Band 87, Nr. 22, 28. November 1977, Seite 136, Nr. 170308v, Columbus, Ohio, US**

(73) Patentinhaber: **BASF Aktiengesellschaft**
**Carl-Bosch-Strasse 38**
**W-6700 Ludwigshafen(DE)**

(72) Erfinder: **Barthold, Klaus, Dr.**
**Paulusbergstrasse 4**
**W-6800 Mannheim 51(DE)**
Erfinder: **Baur, Richard, Dr.**
**Nelkenstrasse 1**
**W-6704 Mutterstadt(DE)**
Erfinder: **Crema, Stefano Carlo, Dr.**
**2136 Glencoe Hills Drive**
**Ann Arbor Michigan 48104(US)**
Erfinder: **Lasowski, Juergen, Dr.**
**Karl-Raeder-Strasse 3**
**W-6703 Limburgerhof(DE)**
Erfinder: **Oppenlaender, Knut, Dr.**
**Otto-Dill-Strasse 23**
**W-6700 Ludwigshafen(DE)**
Erfinder: **Heide, Wilfried, Dr.**
**Am Wurmberg 16**
**W-6713 Freinsheim(DE)**

EP 0 264 841 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft Reaktionsmischungen, enthaltend Copolymere basierend auf hydrophoben Acrylsäure-, bzw. Methacrylsäureestern und ihre Verwendung als Erdölemulsionsspalter zur Schnellentwässerung von Rohölen.

Nach einer Anfangsphase, in der praktisch reines Rohöl gefördert wird, fällt der größte Teil des produzierten Rohöls als Wasser-in-Öl-Emulsionen an.

Das Wasser muß vor dem Transport abgetrennt, bzw. unter eine akzeptable Konzentration abgesenkt werden. Dies erfolgt meist durch den Zusatz von sogenannten Erdölemulsionsspaltern, wobei eine Erwärmung des Rohöls die Auftrennung erleichtert und beschleunigt. Die Zusammensetzungen der Rohölemulsionen schwanken stark je nach Provenienz; zur Erreichung optimaler Demulgierergebnisse sind deshalb weltweit viele verschiedene Erdölemulsionsspalter im Einsatz. Es besteht jedoch ein großes Interesse an verbesserten Demulgatoren, welche bei verschiedensten Rohölemulsionen schnellere Auftrennung in Wasser in Öl sowie gute Restwasser- und Restsalz-Mengen liefern sollen.

Die am häufigsten angewendeten Demulgatoren sind Ethylenoxyd/Propylenoxyd-Blockpolymere, alkoxylierte Alkylphenolformaldehydharze, alkoxylierte Polyamine und insbesondere Vernetzungsprodukte der obigen Grundklassen mit multifunktionellen Reagentien wie z.B. Diisocyanaten, Dicarbonsäuren, Bisglycidylethern, Di-und Trimethylolphenol.

Bekannt sind auch polymere Erdölemulsionsspalter (Canad.Patentschrift 1.010.740 und DE-C1 33 38 923).

Gemäß dieser kanadischen Patentschrift werden in alkoxylierte Alkohole und alkoxylierte Alkylphenolformaldehyd-Harze durch Veretherung mit ungesättigten Glycidylverbindungen (z. B. Glycidylacrylat), durch Veresterung mit Maleinsäureanhydrid oder Fumarsäure oder durch Umesterung mit Acrylestern, bzw. Methacrylestern ungesättigte radikalisch polymerisierbare Funktionen eingeführt, welche in einer anschließenden Reaktion mit anderen Monomeren in Lösung polymerisiert werden. In DE-C1 33 38 923 werden Produkte beschrieben, welche aus einer Copolymerisation von Polyoxyalkylenethern des Allyl-, bzw. Methallylalkohols mit Vinylestern oder Acryl-, bzw. Methacrylsäureestern erhalten werden.

Alle diese Produkte zeigen wirkspezifische oder herstellungsbedingte Schwächen. So kommt es bei Verwendung von Glycidylverbindungen zur Einführung der ungesättigten Funktion bei der Polymerisation häufig zur Bildung von Gelkörpern und Inhomogenitäten, bei Derivaten des Allylalkohols, Methallylalkohols und Maleinsäure ergeben sich schlechte Copolymerisationsbedingungen und bei Umesterungen mit Acrylsäureestern, bzw. Methacrylsäureestern gestaltet sich die vollständige und selektive Veresterung der teilweise multifunktionellen alkoxylierten Ausgangsalkohole schwierig.

Desweiteren kommt es bei der Lagerung der Copolymeren häufig zu Vergelungs- und Verfestigungsreaktionen, insbesondere durch Verwendung von multifunktionellen Ausgangsalkoholen bei der Alkoxylierung. Produkte mit hohem Wirkungspotential und breitem Anwendungsspektrum konnten jedoch gerade durch Verwendung von alkoxylierten multifunktionellen Alkoholen erhalten werden.

Es wurde nun überraschanderweise gefunden, daß als Erdölemulsionsspalter geeignete Reaktionsmischungen, enthaltend Copolymere aus Acrylsäure- oder Methacrylsäureestern und ethylenisch ungesättigten Comonomeren, erhältlich durch

A) Copolymerisation von hydrophoben Acrylsäure- oder Methacrylsäureestern, die durch Veresterung von Acrylsäure bzw. Methacrylsäure mit einer Alkoholkomponente aus Polyalkylenglykolen und Polyalkylenglykolethern erhältlich sind, mit hydrophilen ethylenisch ungesättigten Comonomeren

und

B) Überführung aller oder nahezu aller freier OH-Gruppen des Copolymers durch Veretherung, Veresterung oder Urethanbildung in eine nicht mehr reaktive Form und/oder Neutralisation der bei den Veresterungen verwendeten Säure durch Aminzusatz,

lagerstabil und erhöht wirksam sind.

Das zur Veresterung dienende Gemisch aus Polyalkylenglykolen und Polyalkylenglykolethern besteht in der Regel aus Alkoxylaten der Formel

$$R^1-O-[AO]_x-H \text{ ,}$$

in der $R^1$ den Rest eines ein- oder mehrwertigen Alkohols oder Alkylphenols oder den Rest eines Alkylphenol/Formaldehyd- oder Alkylphenol/Acetaldehyd-Kondensationsproduktes, AO ein Ethylenoxid-Propylenoxid- oder 1,2-Butylenoxidrest oder Mischungen dieser Reste oder Blöcke dieser Reste und x die Zahlen 5 bis 120 bedeutet.

Im besonderen sind Reaktionsmischungen Gegenstand der Erfindung, die erhalten wurden durch Copolymerisation von

A) hydrophoben Acrylsäureestern oder Methacrylsäureestern, deren Alkoholkomponente aus hydrophoben Alkoxylaten der Formel

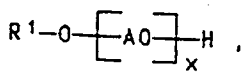

besteht, in der $R^1$, AO und x die oben angegebene Bedeutungen haben mit

B) hydrophilen Comonomeren der Formel

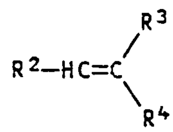

in der

$R^2$ Wasserstoff oder die Reste -COOH, $-COOC_2H_4OH$, $-COOC_2H_4N(C_2H_5)_2$,$-CONH_2$, -CN,

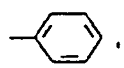

$-OCOCH_3$ , $-CH_2OH$, -NHCHO, $-COOCH_3$, $-COOC_2H_5$,

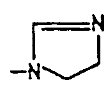 oder 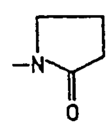

$R^3$ Wasserstoff oder -COOH, und

$R^4$ Wasserstoff oder $-CH_3$ bedeuten,

mit der Maßgabe, daß mindestens eine der Gruppen $R^2$ oder $R^3$ eine hydrophile Gruppe ist, wobei A) zu B) im Gewichtsverhältnis 300:1 bis 1:50 vorliegt und

C) Überführung der freien OH-Gruppen durch Veretherung, Veresterung oder Urethanbildung in eine nicht mehr reaktive Form und/oder Neutralisation der bei der Herstellung der Ester A) oder bei der Veresterung bei C) als Katalysator verwendeten Säure mit einem tertiären Amin.

Die Umsetzung der freien OH-Gruppen kann auch vor der Polymerisation und sogar teilweise vor der Herstellung der Estercomonomeren erfolgt sein.

Die Copolymere werden in an sich bekannter Weise hergestellt, z.B. durch radikalische Copolymerisation in Lösung, Emulsion oder Suspension.

Die Veresterung der Acrylsäure bzw. Methacrylsäure erfolgt vorzugsweise in Gegenwart saurer Veresterungskatalysatoren und unter Verwendung von Schleppmitteln.

Als saure Veresterungskatalysatoren kommen an sich übliche anorganische oder organische Katalysatoren in Betracht wie Schwefelsäure, p-Toluolsulfonsäure, Dodecylbenzolsulfonsäure, Salzsäure oder saure Ionenaustauscher.

Als Schleppmittel sind übliche mit Wasser ein Azeotrop bildende organische Lösungsmittel zu nennen insbesondere Xylol oder Toluol.

Zur Veretherung der freien OH-Gruppen kommen als Agentien beispielsweise Methyljodid, Dimethylsulfat oder Benzylchlorid in Betracht.

Zur Veresterung der freien OH-Gruppen werden vorzugsweise Carbonsäureanhydride wie Acetanhydrid, Maleinsäureanhydrid, Phthalsäureanhydrid oder Bernsteinsäureanhydrid verwendet.

Die Überführung der freien OH-Gruppen in eine Urethangruppierung, d.i. die bevorzugte Reaktion nach der Copolymerisation, erfolgt zweckmäßig durch Einwirkung von Isocyanaten in an sich bekannter Weise z.B. mit Phenylisocyanat oder Stearylisocyanat.

Zur Neutralisation der als Veresterungskatalysator verwendeten Säuren setzt man Amine, vorzugsweise tertiäre Amine zu. Im einzelnen kommen beispielsweise Triethylamin, Tributylamin, Dimethyl-Cy-amin (y = $C_8$-$C_{18}$) oder Triethanolamin in Betracht.

Im einzelnen geht man beispielsweise bei der Herstellung der neuen Polymeren wie folgt vor:

Herstellung der Alkoxylate der Formel $R^1$-O-[AO]-H

a) Herstellung der alkoxylierten Alkohole

Die Darstellung der alkoxylierten Alkohole gelingt in bekannter Weise durch Umsetzung des mono- oder multifunktionellen Alkohols mit einem Alkoxyd oder einer Mischung aus mehreren Alkoxyden oder blockweise mit mehreren Alkoxyden unter Zuhilfenahme basischer Katalysatoren bei Temperaturen von 80 bis 160 °C. Als Alkohole kommen z.B. in Betracht Ethanol, Butanol, Isopropanol, Talgfettalkohol, Stearylalkohol, Alkylphenole der allgemeinen Formel

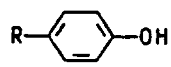 ,

wobei R z.B. $C_9H_{19}$, $CH_3$, $CH(CH_3)_2$, $C(CH_3)_3$ oder $C_8H_{17}$ ist, Ethylenglykol, Propylenglykol, Bisphenol-A, Glycerin, Trimethylolpropan, Pentaerythrit, Sorbit, Polyglycerin oder die unten beschriebenen Alkylphenol/Formaldehyd- bzw. Acetaldehyd-Kondensations-Produkte.

Bevorzugte Alkoxyde sind Propylenoxyd und 1,2-Butylenoxyd oder deren Mischungen, in denen auch Ethylenoxid vorhanden sein kann.

Die Reaktionsbedingungen schwanken je nach Art und Menge der verwendeten Alkoxyde. Generell liegt die Reaktionstemperatur zwischen 80 bis 160 °C und die Menge an basischen Katalysatoren schwankt zwischen 0,25 und 5 %, wobei Kaliumhydroxyd und Natriumhydroxyd bevorzugt sind. Je nach Konsistenz des Ausgangsalkohols bzw. Endproduktes kann zur Verdünnung ein inertes Lösungsmittel beigefügt werden, welches die Umsetzung nicht beeinflußt. Bevorzugt ist Xylol.

Das Verhältnis von Alkohol zu Alkoxyd(en) kann stark variieren, zweckmäßigerweise jedoch im Bereich von 1:120 bis 1:5 liegen.

b) Alkoxylierte Alkylphenol/Formaldehyd- bzw. Acetaldehyd-Kondensationsprodukte

Die als Alkohole zur Alkoxylierung verwendeten Alkylphenol/Formaldehyd- bzw. Acetaldehyd-Harze werden in an sich bekannter Weise durch Umsetzung des Aldehyds mit dem Alkylphenol im Verhältnis 2:1 bis 1:2 bevorzugt 1:1,05 mit Basen- oder Säurekatalyse, bevorzugt Säurekatalyse bei Temperaturen von 80 bis 250 °C unter Zuhilfenahme eines hochsiedenden Lösungsmittels zur vollständigen azeotropen Entfernung des sich bildenden Reaktionswassers hergestellt. Als Alkylphenole werden z.B. Nonylphenol, t-Butylphenol oder Octylphenol verwendet, als Aldehyde kommen bevorzugt Formaldehyd und Acetaldehyd zur Anwendung. Als Katalysator wird im allgemeinen eine Alkylsulfonsäure oder Alkylbenzolsulfonsäure, z.B. Dodecylbenzolsulfonsäure in Mengen von 0,2 bis 2 %, vorzugsweise 0,2 bis 0,5 % verwendet.

Am Anfang der Reaktion wird die Temperatur bei 90 bis 120 °C gehalten, bis der Großteil des Reaktionswassers abdestilliert ist. Anschließend wird zur vollständigen Umsetzung bis zum Siedepunkt des Lösungsmittels erhitzt und restliche Wassermengen azeotrop entfernt. Im Mittel enthalten die Moleküle 4 bis 12 aromatische Kerne, bevorzugt 5 bis 9.

Die so erhaltenen Kondensationsprodukte werden wie unter a) angegeben alkoxyliert.

c) Teilweise Umsetzung der freien OH-Gruppen der Alkoxylate aus a) und b)

Nach beendeter Alkoxylierung können die Alkoxylate aus Schritt a) oder b) teilweise endgruppenverschlossen werden, wobei ein Endgruppenverschluß von 20 bis 90 % der OH-Gruppen bevorzugt ist. Der Verschluß endständiger Hydroxylgruppen kann durch säurekatalysierte Veresterung mit Carbonsäureanhydriden, bevorzugt Essigsäureanhydrid, Phthalsäureanhydrid, Bernsteinsäureanhydrid und Maleinsäureanhydrid bei Temperaturen von 50 bis 130 °C oder durch Umsetzung der Alkoholate mit Dimethylsulfat,

Benzylchlorid und Methyljodid, wobei diese durch Zugabe der Alkylierungsmittel zu den Natrium- oder Kaliumalkoholaten bei Temperaturen von 40 bis 80 ° C gelingt, und durch Reaktion mit Isocyanaten erfolgen.

A) Umsetzung der Alkoxylate zu ungesättigten Monomeren

Da die Demulgatoren für Rohölemulsionen grenzflächenaktive Substanzen sein müssen, wird die Größe der Hydrophilie, bzw. Hydrophobie über das Verhältnis von Polyethylenoxydblock (hydrophil) zu Polypropylenoxydblock (hydrophob) zu hydrophilen Comonomeren (z.B. Acrylsäure) eingestellt. Da diese Produkte zur Erreichung maximaler Wirkung rohöllöslich sein müssen, ist es wichtig, daß durch einen großen hydrophoben Rest der hydrophile Polyacrylsäureanteil im Copolymeren in einem aromatischen Lösungsmittel (z.B. Toluol, Xylol oder Aromatengemisch) in Lösung gehalten wird. Dies gelingt nur durch vollständige und selektive Einführung einer radikalisch polymerisierbaren Funktionalität in den hydrophoben, alkoxylierten, eventuell teilweise endgruppenverschlossenen Alkohol und dessen Verwendung in der nachfolgenden radikalischen Copolymerisation mit hydrophilen Comonomeren.

Zur Einführung der ungesättigten Funktionalität in die alkoxylierten, eventuell teilweise endgruppenverschlossenen Alkohole werden diese in Gegenwart von sauren Katalysatoren (z.B. p-Toluolsulfonsäure, Schwefelsäure oder Dodecylbenzolsulfonsäure) bei Temperaturen von 80 bis 150 ° C mit Acrylsäure bzw. Methacrylsäure verestert, wobei die notwendige vollständige Entfernung des Reaktionswassers mittels eines azeotropen Schleppmittels, bevorzugt Toluol oder Xylol, durchgeführt wird.

Um ein Polymerisieren während der Veresterung zu verhindern, empfiehlt es sich, an sich bekannte Stabilisatoren (bevorzugt Hydrochinonmonomethylether) einzusetzen. Das Verhältnis von alkoxyliertem Alkohol zu Acrylsäure bzw. Methacrylsäure kann zwischen 1:1 bis 1:n variiert werden, wobei n die Funktionalität (d.h. Anzahl der Hydroxylgruppen) des Ausgangsalkohols bedeutet. Bevorzugt ist ein Verhältnis von 1:1, da sonst Vergelungserscheinungen während der nachfolgenden Polymerisation zu beobachten sind. Die vollständige Veresterung der Acrylsäure bzw. Methacrylsäure wird zweckmäßigerweise durch analytische Methoden (z.B. Säurezahl) verfolgt. Die Menge an Stabilisator schwankt zwischen 0,3 und 2 Gew.%, bevorzugt 1 Gew.%, bezogen auf die Menge an Acrylsäure bzw. Methacrylsäure. Der Säurekatalysator wird in Mengen von 0,5 bis 5 Gew.% zugesetzt, bevorzugt 2 bis 3 Gew.% Gleichgute Veresterungsergebnisse erzielt man durch Verwendung von Acrylsäureanhydrid bzw. Methacrylsäureanhydrid und Acrylsäurechlorid bzw. Methacrylsäurechlorid. Dabei entfällt das Auskreisen des Wassers durch azeotrope Destillation.

Das Gewichtsverhältnis von Lösungsmittel zu der Summe aus oxalkyliertem Alkohol und ungesättigter Carbonsäure kann zwischen 30:70 und 70:30 schwanken, wobei ein Verhältnis von 50:50 bis 30:70 bevorzugt ist.

Nach Veresterung mit Acrylsäure, bzw. Methacrylsäure können noch vorhandene Hydroxylfunktionen mit Carbonsäureanhydriden und Isocyanaten verschlossen werden. Bevorzugt sind Phthalsäureanhydrid, Essigsäureanhydrid und Maleinsäureanhydrid. Es können dabei alle Hydroxylgruppen durch Einsatz äquimolarer Mengen an Anhydriden, Alkylierungsmittel oder Isocyanaten verschlossen oder nur ein Teilverschluß durchgeführt werden. Bevorzugt ist Umsetzung von 70 bis 100 % der noch vorhandenen endständigen Hydroxylgruppen. Das Anhydrid oder Isocyanat wird der Lösung des Acryl-, bzw. Methacrylsäureesters zugesetzt, eventuell in Gegenwart eines Katalysators und je nach Reaktivität innerhalb von 0,5 bis 5 h bei 70 bis 120 ° C die Reaktion beendet.

Nach beendeter Veresterung können die zugesetzten katalytischen Säuremengen durch Zugabe äquimolarer Mengen von Aminen, z.B. Triethanolamin, Triethylamin oder Tributylamin, neutralisiert werden. Eine Neutralisation der Säuren nach durchgeführter Polymerisation und gegebenenfalls Kondensation ist jedoch bevorzugt.

B) Copolymerisation der Alkoxylatester-Monomere aus A) mit hydrophilen Comonomeren

Die Herstellung der Copolymere kann durch Lösungs-, Emulsions- oder Fällungspolymerisation erfolgen, wobei die Lösungspolymerisation in einem unpolaren Lösungsmittel (wie Toluol oder Xylol) bevorzugt ist. Zur der Lösung des veresterten, eventuell endgruppenverschlossenen, alkoxylierten Alkohols, bzw. einer Mischung mehrerer verschiedener veresterter, evtl. endgruppenverschlossener, alkoxylierter Alkohole aus A) wird das Comonomer, bzw. eine Mischung mehrerer Comonomere gegeben oder zugetropft, und die Reaktion mit Hilfe bekannter Radikalstarter bei Temperaturen von 60 bis 140 ° C durchgeführt. Typische Comonomere sind: Acrylsäure, Methacrylsäure, Maleinsäureanhydrid, Hydroxyethylacrylat, N,N-Diethylaminoethylacrylat, Acrylamid, Acrylnitril, Vinylacetat, Allylalkohol, Vinylformamid, Vinylimidazol, Vinylpyrrolidon, Fumarsäure, Maleinsäure, N,N-Dimethylacrylamid oder Vinylmethylether, wobei Acrylsäure, eventuell in

Mischung mit anderen Comonomeren im Verhältnis 10:1 bis 1:1 bevorzugt ist.

Als Radikalstarter kommen in der Regel 2,2′-Azo-bis-isobutyronitril(AIBN), Dibenzoylperoxyd, t-Butylperacetat, 2,2-Azo-bis-2,4-dimethylvaleronitril in Betracht, wobei AIBN und Dibenzoylperoxyd bevorzugt sind. Die Menge an eingesetzten Radikalstartern beträgt in der Regel zwischen 0,1 bis 2 Gew.%, bezogen auf den gesamten Monomergehalt. Um eine möglichst niedrige Restmonomerkonzentration zu erreichen, empfiehlt sich eine Reaktionsdauer von fünffacher Halbwertszeit des Starters bei der gewählten Reaktionstemperatur. Durch Zutropfen des Radikalstarters, eventuell in Gegenwart bekannter, das Molekulargewicht regulierender Substanzen wie Mercaptane oder Aldehyde, eventuell auch durch gleichzeitigen Zulauf (eines Teils) des Comonomeren läßt sich die exotherme Copolymerisation hinsichtlich Wärmetönung, Molekulargewichtsverteilung und Restmonomergehalt optimieren. Bevorzugt ist die einmalige anfängliche Zugabe von 0,1 bis 0,8 Gew.% AIBN zur Lösung des Esters und des Comonomeren und Polymerisation bei 60 bis 90 °C innerhalb von 2 bis 5 Stunden sowie die kontinuierliche Zudosierung von AIBN zu der Lösung von Ester und Comonomeren (eventuell nach anfänglicher Zugabe von AIBN zur Lösung) innerhalb von 0,5 bis 3 h bei Temperaturen von 60 bis 90 °C, eventuell in Gegenwart von das Molekulargewicht regelnder Verbindungen wie Mercaptane und Aldehyde in Mengen von 0,05 bis 1 Gew.%, bezogen auf das Comonomere. Möglich, aber nicht bevorzugt, ist auch die gleichzeitige Verwendung mehrerer veresterter, eventuell endgruppenverschlossener, alkoxylierter Alkohole sowie die Zugabe oder Zudosierung mehrerer Comonomerer. Die Polymerisationskonzentrationen liegen zwischen 20 und 70 Gew.%, bevorzugt sind 40 bis 60 Gew.%. Zur Erzielung gut wirksamer Produkte empfiehlt sich manchmal eine Vorpolymerisation des hydrophoben, eventuell endgruppenverschlossenen Esters aus alkoxyliertem Alkohol und Acrylsäure bzw. Methacrylsäure innerhalb 1 bis 2 h mit den oben genannten Radikalstartern und eine anschließende Zugabe oder kontinuierliche Zudosierung des Comonomeren über 1/3 bis 2/3 der Reaktionszeit, eventuell mit zusätzlichem Radikalstarter.

Die K-Werte der erhaltenen Polymere betragen im allgemeinen 15 bis 60 (gemessen in 1 %iger xylolischer Lösung). Zur Beeinflußung des Molekulargewichtes können übliche Regler wie Aldehyde oder Thioverbindungen zugesetzt werden (z.B. Thioethanol, Thioglycolsäure). Auch vernetzende difunktionelle Comonomere wie Methylenbisacrylamid können zur Erhöhung des Molgewichtes verwendet werden.

C) Endgruppenverschluß und/oder Neutralisation der katalytischen Säuremengen nach beendeter Polymerisation

Zur Erhöhung der Wirksamkeit und insbesondere zur Steigerung der Lagerstabilität der Copolymeren erfolgt eine teilweise intramolekulare Veresterung nach durchgeführter Polymerisation bzw. ein abschließender Verschluß noch freier Hydroxylfunktionen mittels Umsetzung mit Anhydriden oder Isocyanaten und/oder eine Neutralisation noch vorhandener katalytischer Säuremengen mit Aminen zur Vermeidung von Umesterungsreaktionen, welche zur Vergelung der Produkte führen können.

Eine teilweise intramolekulare Kondensation gelingt durch Erwärmung der Polymerisationslösung aus B) auf Temperaturen von 100 bis 140 °C innerhalb von 1 bis 5 h. Bevorzugt ist eine zweistündige Erwärmung der xylolischen Polymerisationslösung aus B) auf 110 bis 120 °C. Bei weiterführender Kondensation kann es zu Vergelungserscheinungen kommen.

Die Umsetzung der freien OH-Gruppen mit Anhydriden und Isocyanaten kann direkt nach der Polymerisation oder nach teilweiser intramolekularer Kondensation durchgeführt werden, wobei auch ein teilweiser Verschluß der noch vorhandenen Hydroxylgruppen nach der Polymerisation und anschließende Kondensation mit azeotropen Schleppmitteln unter Wasserauskreisung erfolgen kann. Bevorzugt ist der vollständige Endgruppenverschluß nach teilweiser intramolekularer Kondensation bei 110 bis 120 °C und/oder der Verschluß von 60 bis 80 % der vorhandenen Hydroxylgruppen direkt nach Polymerisation mit anschliessender Kondensation durch azeotropes Auskreisen des Reaktionswassers mit Hilfe eines Schleppmittels, bevorzugt Xylol.

Der Endgruppenverschluß gelingt durch Zugabe oder Zudosierung der gewünschten Menge an Anhydrid oder Isocyanat zur Polymerisationslösung und Erwärmung auf 70 bis 120 °C innerhalb von 0,5 bis 5 h eventuell in Gegenwart an sich bekannter Katalysatoren. Als Veresterungsagens bevorzugt sind Essigsäureanhydrid, Phthalsäureanhydrid und Bernsteinsäureanhydrid.

Fand der Endgruppenverschluß schon auf der Stufe der Alkoxylate oder der hydrophoben Acrylsäure-, bzw. Methacrylsäureester statt, so ist eine Kondensation unter Zuhilfenahme eines azeotropen Schleppmittels nach der Polymerisation bevorzugt.

Zusätzlich oder alternativ zum Endgruppenverschluß wird die Neutralisation noch vorhandener katalytischer Säuremengen aus der Veresterungsstufe mit Aminen vorgenommen. Die Neutralisation wird bevorzugterweise nach beendeter Polymerisation, Kondensation und eventuellem Endgruppenverschluß mit

Anhydriden oder Isocyanaten durchgeführt, wodurch weiterführende Veresterungsreaktionen, welche zu Vergelungen führen können, verhindert werden.

Die Neutralisation der noch vorhandenen katalytischen Säurespuren aus der Veresterungsreaktion gelingt durch Zugabe äquimolarer Mengen von Aminen, z.B. Triethanolamin, Tributylamin oder Triethylamin zu der Lösung des eventuell endgruppenverschlossenen Polymeren und Reaktion bei Temperaturen von 20 bis 80°C innerhalb von 2 Stunden. Die vollständige Neutralisation kann über die Aminzahl verfolgt werden.

D) Modifikation des Polymeren aus B) und C) (fakultativ)

Zur Wirkungssteigerung und Abstimmung auf das jeweilig zu behandelnde Rohöl kann eventuell eine nachträgliche Modifikation der unter B) und C) erhaltenen Copolymeren sinnvoll sein. Je nach verwendeten Comonomeren bei der Copolymerisation können folgende Veränderungen des Produktes erfolgen:

1) Abmischung mit einem alkoxylierten Alkohol oder einer Mischung aus mehreren alkoxylierten Alkoholen wie sie unter a) beschrieben erhalten werden oder mit anderen Copolymeren aus B) und C) im Verhältnis 10:90 bis 90:10, bevorzugt 50:50 bis 80:20.

Bessere Wirksamkeiten können darüberhinaus auch durch Zusatz sogenannter Cotenside zu den Copolymeren in Gewichtsmengen von 5 bis 30 Gew.% erzielt werden. Solche Cotenside können z.B. Dodecylhydrogensulfat, Alkylbenzolsulfonate oder Alkylnaphthalinsulfonate sein.

2) Eine Molekulargewichtssteigerung kann durch nachträgliche Vernetzung mit multifunktionellen Verknüpfungsreagentien erfolgen, welche mit reaktiven Gruppen des Copolymeren reagieren.

Dabei werden die Vernetzungen (abhängig vom Vernetzertyp) mit 0,1 bis 10 Gew.%, bevorzugt 1 bis 4 Gew.% an multifunktioneller Komponente bei Temperaturen von 80 bis 140°C durchgeführt. Als multifunktionelle Vernetzer werden z.B. je nach verwendeten Comonomeren eingesetzt: Bisglycidylether (bevorzugt Bisglycidylether von Bisphenol-A), multifunktionelle Alkohole (z.B. Sorbit, Ethylenglykol), Diisocyanate (z.B. Toluoldiisocyanat) und vergleichbare Verbindungen, welche sich mit reaktiven Stellen am Copolymeren umsetzen.

3) Nachoxalkylierung mit einem Alkoxyd, einer Mischung mehrerer Alkoxyde oder blockweise mit verschiedenen Alkoxyden. Dabei werden die Copolymere aus B) und C) mit basischen Katalysatoren (bevorzugt Natriumhydroxyd, Kaliumhydroxyd) in Mengen von 0,5 bis 5 Gew.% bei Temperaturen von 100 bis 150°C mit dem Alkoxyd(en) umgesetzt. Als Alkoxyde werden bevorzugt Ethylenoxyd-Propylenoxyd oder 1,2-Butylenoxyd angewendet, wobei das Verhältnis zwischen Copolymer und Alkoxyd zwischen 5:95 und 95:5 variiert.

4) Quaternisierung von N-haltigen Copolymeren mit bekannten Quaternisierungsmitteln, wie Dimethylsulfat oder Methyljodid bei Temperaturen von 50 bis 120°C. Dabei kann eine vollstädige oder nur teilweise Quaternisierung der vorhandenen Aminfunktionen erfolgen.

Es besteht keine Beschränkung auf alleinige Anwendung einer Modifikation auf das Copolymere aus C). Vielmehr können beliebige Veränderungen gemäß 1) bis 4) nacheinander durchgeführt werden.

Beispiele

a) Herstellung der alkoxylierten Alkohole (Alkoxylate)

In einem Autoklav werden unter Stickstoffatmosphäre 31 g Trimethylolpropan und 0,3 g Kaliumhydroxyd vorgelegt und die Mischung bei 130 bis 140°C und 6 bar mit 800 g Propylenoxyd innerhalb von 10 Stunden umgesetzt. Anschließend werden in einer zweiten Stufe bei 120 bis 130°C noch 101 g Ethylenoxyd zugegeben. Gegen Ende der Umsetzung hält man die Temperatur für 1 h bei 140°C um möglichst vollständige Umsetzung zu erzielen. Das Molekulargewicht berechnet sich aus der gemessenen OH-Zahl auf 3820. Dies ist Beispiel a5 in der nachfolgenden Tabelle. Zur Vereinfachung wird auf ausführliche Beschreibung der weiteren Beispiele verzichtet. Die Reaktionsführungen entsprechen jedoch weitgehend dem obigen Beispiel. Bei Umsetzungen mit Mischoxyden werden die jeweiligen Alkoxyde in eine Vorlage gemischt und anschließend zudosiert.

Tabelle 1

alkoxylierte Alkohole nach a)

| Bsp. | Alkohol | Teile Alkohol | Katalysator | Teile Katalysator | Teile Propylenoxyd | Teile Butylenoxyd | Teile Ethylenoxyd | Aufbau |
|---|---|---|---|---|---|---|---|---|
| a 1 | Nonylphenol | 158 | KOH | 1,6 | 835 | – | 158 | Block |
| a 2 | Talgfettalkohol | 64 | KOH | 0,64 | 870 | – | 22 | Block |
| a 3 | Propylenglykol | 19 | KOH | 0,2 | 435 | – | 114 | Block |
| a 4 | Propylenglykol | 19 | KOH | 0,2 | 435 | – | 53 | Block |
| a 5 | Trimethylolpropan | 31 | KOH | 0,3 | 800 | – | 101 | Block |
| a 6 | Trimethylolpropan | 54 | KOH | 1,1 | 928 | – | – | – |
| a 7 | Trimethylolpropan | 47 | KOH | 1,4 | 677 (Mischung) | 677 (Mischung) | 154 | Block |
| a 8 | Trimethylolpropan | 27 | KOH | 0,8 | 1160 | – | 26 | Block |
| a 9 | Pentaerythrit | 27 | KOH | 0,3 | 928 | – | 35 | Block |
| a 10 | Pentaerythrit | 54 | KOH | 0,5 | 928 | – | 70 | Block |
| a 11 | Sorbit | 91 | KOH | 0,9 | 870 | – | 88 | Block |
| a 12 | Sorbit | 25 | KOH | 0,8 | 974 | – | 24 | Block |
| a 13 | Nonylphenol/ Formaldehyd Harz aus b 1 | 153 | KOH | 1,5 | 830 | – | 24 | Block |
| a 14 | t-Butylphenol/ Acetaldehyd Harz aus b 2 | 270 | KOH | 2,7 | 270 | – | 270 | Mischung |
| a 15 | Trimethylolpropan | 31 | KOH | 1,4 | 1073 | – | 305 | Block |

b) Herstellung der Alkylphenol/Formaldehyd- bzw. Acetaldehyd-Harze

Zu 440 g Nonylphenol werden 119 g Xylol gegeben und bei 40 ° C 60 g Paraformaldehyd zudosiert. Anschließend gibt man bei 35 ° C 1,5 g Dodecylbenzolsulfonsäure zu, wonach eine exotherme Kondensation

einsetzt. Durch Kühlung hält man die Reaktionstemperatur für 3 Stunden bei 65 bis 70 ° C. Anschließend wird der Ansatz 2 h auf 90 ° C erwärmt. Um die Umsetzung zu vervollständigen, erhitzt man 4 h auf 95 bis 100 ° C, wobei der Ansatz unter Rückfluß destilliert. Danach wird das Reaktionswasser abdestilliert und zur vollständigen Entwässerung 6 h mit Xylol azeotrop Wasser entfernt. Nach Abkühlung erhält man das Nonylphenol/Formaldehyd-Harz als mittelviskose 75 bis 80 %ige Lösung in Xylol. Dies ist Beispiel b1 in der nachfolgenden Tabelle.

Tabelle 2

Alkylphenol/Formaldehyd-, bzw. Acetaldehyd-Harze

| Bsp. | Alkylphenol t-Butylphenol | Teile Alkylphenol | Aldehyd | Teile Aldehyd | Katalysator | Teile Katalysator | Teile Lösungsmittel |
|---|---|---|---|---|---|---|---|
| b 1 | Nonylphenol | 440 | Paraformaldehyd | 60 | Dodecylbenzolsulfonsäure | 1,5 | 199 |
| b 2 | t-Butylphenol | 300 | Acetaldehyd | 86 | Dodecylbenzolsulfonsäure | 1,5 | 129 |

c) Endgruppenverschluß der Alkoxylate aus a) und b)

200 g des Alkoxylats aus Beispiel a 15 werden mit 8 g 50 %iger Natriumhydroxydlösung vermischt und unter vermindertem Druck hei 100 bis 170 ° C wird das Alkoholat hergestellt.

Anschließend tropft man bei 50 bis 55°C 12,6 g Dimethylsulfatlösung zu und prüft nach beendeter Zugabe auf freies Dimethylsulfat. Eventuell läßt man bei 60 bis 70°C nachreagieren, bis der Test auf freies Dimethylsulfat negativ verläuft. Dies ist Beispiel c1.

A) Herstellung der alkoxylierten Estermonomere

1) 122 g des Produktes aus Beispiel a5 werden mit 2,4 g Acrylsäure, 24 mg Hydrochinonmonomethylether, 2,5 g para-Toluolsulfonsäure und 55 g Xylol unter Stickstoffatmosphäre gemischt. Durch Erhitzen auf 150°C kreist man innerhalb von 3 h 0,6 ml Wasser aus. Zur Kontrolle der vollständigen Veresterung verfolgt man die Säurezahl (d.h. die Menge an noch freier Acrylsäure) in der Lösung. Sie muß vom theoretischen Ausgangswert von 20 auf mindestens 6 gefallen sein, um eine genügende Veresterung anzuzeigen. Man erhält den Acrylsäureester als 70 %ige klare Lösung in Xylol. Dies ist Beispiel A3 in der nachfolgenden Tabelle.

2) 609,4 g des Produktes aus Beispiel a15 werden mit 7,9 g Acrylsäure, 79 mg Hydrochinonmonomethylether, 7,6 g para-Toluolsulfonsäure und 268 g Xylol unter Stickstoffatmosphäre gemischt. Durch Erhitzen auf 150°C kreist man innerhalb von 3 h 1,9 ml Wasser aus. Die Säurezahl fällt nach 3 h auf einen Wert um 4,0. Nach beendeter Veresterung mit Acrylsäure läßt man abkühlen, gibt man 14,3 g Essigsäureanhydrid zu und erhitzt 2 h auf 100°C. Dies ist Beispiel A14 in der nachfolgenden Tabelle.

Die Verfahrensweise bei den weiteren Beispielen ist ähnlich. Eventuell sind längere oder auch kürzere Reaktionszeiten zur Erzielung einer vollständigen Veresterung und Endgruppenverschließung anzuwenden.

Tabelle 3

Veresterung der alkoxylierten Alkohole aus a) mit Acrylsäure, bzw. Methacrylsäure

| Bsp. | ungesättigte Carbonsäure | Teile | alkoxylierter Alkohol | Teile | Stabilisator | Teile mg | Katalysator | Teile | Teile Lösungsmittel | Bemerkungen |
|---|---|---|---|---|---|---|---|---|---|---|
| A 1 | Acrylsäure | 4 | a 2 | 189 | Hydrochinonmonomethylether | 160 | p-Toluolsulfonsäure | 3 | 196 Toluol | keine |
| A 2 | Acrylsäure | 10 | a 1 | 222 | " | 100 | " | 4,6 | 92 Xylol | keine |
| A 3 | Acrylsäure | 2,4 | a 5 | 122 | " | 24 | " | 2,5 | 55 Xylol | keine |
| A 4 | Acrylsäure | 4 | a 7 | 222 | " | 40 | " | 4,5 | 99 Xylol | keine |
| A 5 | Methacrylsäure | 5,2 | a 9 | 272 | " | 52 | " | 5,6 | 121 Xylol | keine |
| A 6 | Methacrylsäure | 18,9 | a 10 | 263 | " | 209 | " | 5,2 | 123 Toluol | keine |
| A 7 | Acrylsäure | 2,8 | a 12 | 256 | " | 28 | " | 5,6 | 113 Xylol | keine |
| A 8 | Acrylsäure | 1,2 | a 8 | 91 | " | 12 | " | 1,9 | 40 Xylol | keine |
| A 9 | Methacrylsäure | 3 | a 8 | 194 | " | 30 | " | 4,1 | 86 Xylol | keine |
| A10 | Methacrylsäure | 25 | a 3 | 220 | " | 280 | " | 5,1 | 107 Xylol | keine |
| A11 | Methacrylsäure | 9,4 | a 13 | 340 | " | 80 | " | 9,2 | 154 Xylol | keine |
| A12 | Acrylsäure | 4 | a 13 | 458 | " | 40 | " | 8,8 | 202 Xylol | keine |
| A13 | Acrylsäure | 4 | a 14 | 158 | " | 36 | " | 4,3 | 71 Xylol | keine |
| A14 | Acrylsäure | 7,9 | a 15 | 609 | " | 79 | " | 7,9 | 268 Xylol | Endgruppenverschluß mit 70 % Essigsäureanhydrid |
| A15 | Acrylsäure | 7,9 | a 15 | 609 | " | 79 | " | 7,9 | 268 Xylol | keine |
| A16 | Acrylsäure | 4 | c 1 | 215 | " | 36 | " | 19 | 238 Xylol | keine |

B) Copolymerisation der hydrophoben ungesättigten Ester aus A) mit Comonomeren

Beispiel 1

Zu 587 g der Lösung des unter A3 hergestellten veresterten Alkohols werden unter Stickstoffatmosphäre 72 g Acrylsäure, 284 mg 2,2'-Azo-bisisobutyronitril und 307 g Xylol gegeben und die Mischung 3 h bei 80 ° C gerührt. Anschliessend wird 2 h auf 110 ° C erhitzt. Das erhaltene Copolymerisat besitzt einen K-Wert von 28,3 (gemessen als 1 %ige xylolische Lösung). Dies ist Beispiel B1 in der nachfolgenden Tabelle.

Beispiel 2

764 g der Lösung des unter A1 hergestellten veresterten Alkohols werden mit 212 mg 2,2'-Azo-bisisobutyronitril versetzt und unter Stickstoffatmosphäre 2 h bei 90 ° C gerührt. Anschließend gibt man 72 g Acrylsäure und 72 g Xylol zu und rührt noch 15 h bei 100 ° C. Dies ist Beispiel B2 in der nachfolgenden Tabelle.

Beispiel 3

Zu 707 g der Lösung des unter A5 hergestellten veresterten Alkohols werden unter Stickstoffatmosphäre 10 g Acrylsäure, 156 mg 2,2'-Azobisisobutyronitril und 293 g Xylol gegeben und die Lösung auf 80 ° C erhitzt. Man tropft anschließend innerhalb von 10 h eine Lösung von 62 g Acrylsäure in 62 g Xylol zu. Nach beendeter Zugabe rührt man noch 5 h bei 120 ° C nach. Dies ist Beispiel B3 in der nachfolgenden Tabelle.

Beispiel 4

Zu 893 g der Lösung des unter A15 hergestellten veresterten Alkohols werden unter Stickstoffatmosphäre 95,8 g Acrylsäure, 0,94 g n-Butyraldehyd und 350 g Xylol gegeben und die Lösung unter Rühren auf 90 ° C erwärmt. Innerhalb von 3 h wird eine Lösung aus 486 mg 2,2'-Azo-bisisobutyronitril in 103 g Xylol zugetropft. Nach beendeter Zugabe läßt man noch 2 h bei 110 ° C nachreagieren. Dies ist Beispiel B16 in der nachfolgenden Tabelle.

Beispiel 5

Zu 893 g der Lösung des unter A14 hergestellten veresterten und teilweise endgruppenverschlossenen Alkohols werden unter Stickstoffatmosphäre 95,8 g Acrylsäure, 436 mg 2,2' -Azo-bisisobutyronitril und 453 g Xylol gegeben.

Man erwärmt 3 h auf 80 ° C und kreist anschließend 3 h unter Rückfluß azeotrop Wasser aus. Das Produkt fällt als 50 %ige Lösung in Xylol an, besitzt einen K-Wert von 21,2 (gemessen als 1 %ige xylolische Lösung) und hat eine OH-Zahl kleiner 1. Dies ist Beispiel B17 in der nachfolgenden Tabelle.

Die nachfolgenden Produkte werden analog den obigen Beispielen synthetisiert. Bei den Copolymerisationen, wo zwei verschiedene Ester aus A) verwendet werden, legt man beide Komponenten zu Beginn der Polymerisation vor und verfährt analog den Beispielen 1 bis 3. Bei Copolymerisation mit zwei verschiedenen Comonomeren gibt man beide vor Beginn der Reaktion zu (analog Beispiel 1) oder tropft die Comonomermischung langsam während der Reaktion zu (analog Beispiel 3).

Tabelle 4

Copolymerisate aus hydrophilen Acrylsäureestern, bzw. Methacrylsäureestern und Comonomeren

| Bsp. | 1. Ester aus Bsp. | 2. Ester aus Bsp. | T e i l e Ester 1 | Ester 2 | 1. Comon. | 2. Comon. | T e i l e 1. Comon. | 2. Comon. | Radikal-starter | Teile Radi-kalst. (mg) | Dauer (h) | Tempe-ratur (°C) | Wirk-stoff-gehalt (%) | analog Bsp. |
|---|---|---|---|---|---|---|---|---|---|---|---|---|---|---|
| B 1 | A 3 | – | 587 | – | Acryl-säure | – | 72 | – | AIBN | 248 | 5 | 80-110 | 50 | 1 |
| B 2 | A 1 | – | 764 | – | " | – | 72 | – | AIBN | 212 | 17 | 90-100 | 50 | 2 |
| B 3 | A 5 | – | 707 | – | " | – | 72 | – | AIBN | 156 | 15 | 80-120 | 50 | 3 |
| B 4 | A 6 | – | 395 | – | " | – | 72 | – | AIBN | 144 | 15 | 80-115 | 50 | 1 |
| B 5 | A 2 | – | 229 | – | " | – | 86 | – | AIBN | 306 | 15 | 80-120 | 50 | 1 |
| B 6 | A 2 | A 3 | 229 | 587 | " | – | 144 | – | AIBN | 550 | 5 | 80-120 | 50 | 1 |
| B 7 | A 8 | – | 867 | – | " | – | 144 | – | AIBN | 393 | 5 | 80-110 | 50 | 1 |
| B 8 | A 4 | – | 358 | – | " | – | 50 | – | AIBN | 99 | 15 | 80-110 | 50 | 1 |
| B 9 | A 7 | – | 1045 | – | " | – | 29 | – | AIBN | 170 | 5 | 80-110 | 50 | 1 |
| B 10 | A 3 | – | 579 | – | " | Hydroxy-ethyl-acrylat | 58 | 23 | AIBN | 267 | 13 | 80-120 | 50 | 1 |
| B 11 | A 3 | – | 579 | – | " | Vinyl-acetat | 58 | 17 | AIBN | 258 | 15 | 80-120 | 50 | 1 |
| B 12 | A 3 | – | 579 | – | " | Styrol | 58 | 21 | AIBN | 263 | 15 | 80-100 | 50 | 1 |
| B 13 | A 12 | – | 1307 | – | " | – | 176 | – | AIBN | 459 | 15 | 80-110 | 50 | 1 |
| B 14 | A 3 | – | 587 | – | " | – | 72 | – | Dibenzoyl-peroxyd | 366 | 15 | 100-120 | 50 | 1 |

Fortsetzung Tabelle 4

Copolymerisate aus hydrophilen Acrylsäureestern, bzw. Methacrylsäureestern und Comonomeren

| Bsp. | 1. Ester aus Bsp. | 2. Ester aus Bsp. | Teile Ester 1 | Teile Ester 2 | 1. Comon. | 2. Comon. | Teile 1. Comon. | Teile 2. Comon. | Radikalstarter | Teile Radikalst. (mg) | Dauer (h) | Temperatur (°C) | Wirkstoffgehalt (%) | analog Bsp. |
|---|---|---|---|---|---|---|---|---|---|---|---|---|---|---|
| B15 | A 2 | A 7 | 229 | 1045 | Acrylsäure | Hydroxyethylacrylat | 130 | 58 | Dibenzoylperoxyd | 817 | 15 | 100-120 | 50 | 1 |
| B16 | A 15 | - | 893 | - | " | - | 95,8 | - | AIBN | 486 | 5 | 90-110 | 50 | 4 |
| B17 | A 14 | - | 893 | - | " | - | 95,8 | - | AIBN | 453 | 6 | 80-145 | 50 | 5 |
| B18 | A 15 | - | 893 | - | " | - | 95,8 | - | AIBN | 453 | 5 | 80-110 | 50 | 1 |
| B19 | A 16 | - | 238 | - | " | - | 36,0 | - | AIBN | 164 | 6 | 80-145 | 50 | 5 |

(C) Endgruppenverschluß und Neutralisation der katalytischen Säuremengen nach beendeter Polymerisation

Das nachfolgende Beispiel, in dem 70 % der noch vorhandenen OH-Gruppen mit Essigsäureanhydrid verschlossen werden, nachträglich eine weitere Veresterung der restlichen OH-Gruppen durch azeotrope Veresterung und eine Neutralisation der p-Toluolsulfonsäure mit Tributylamin durchgeführt wird, soll nur

exemplarisch die Möglichkeiten des Endgruppenverschlusses und der Neutralisation aufzeigen. Je höher der Anteil freier OH-Gruppen nach dem Endgruppenverschluß ist, desto stärker steigt der K-Wert des Polymeren in der nachfolgenden azeotropen Veresterung.

Beispiel 1

Zu 893 g der Lösung des unter A15 hergestellten veresterten Alkohols werden unter Stickstoffatmosphäre 95,8 g Acrylsäure, 453 mg 2,2'-Azo-bisisobutyronitril und 460 g Xylol gegeben und 3 h bei 80 °C polymerisiert. Der K-Wert des erhaltenen Copolymerisates liegt bei 13,2 (gemessen als 1 %ige xylolische Lösung). Man läßt die Lösung abkühlen, gibt 14,3 g Essigsäureanhydrid zu und erhitzt 3 h auf 100 °C. Anschließend erwärmt man 3 h auf 140 bis 145 °C und kreist azeotrop Wasser aus. Nach Abkühlung auf 40 °C gibt man 7,7 g Tributylamin zu und rührt 2 h nach. Das Produkt fällt als mittelviskose 50 %ige Lösung in Xylol an. Der K-Wert beträgt 23,8 (gemessen als 1 %ige xylolische Lösung). Die OH-Zahl ist kleiner 1. Dies ist Beispiel C1 in der nachfolgenden Tabelle.

Tabelle 5

Copolymerisate aus hydrophilen Acrylsäureestern mit Acrylsäure und nachfolgendem Endgruppenverschluß

| Bsp. | Ester aus Bsp. | Teile Ester | Teile AS | Teile AIBN | Dauer d. Polymerisation | Temp. d. Polymerisation | Verschluß Komponente | Menge g | Dauer h | Temp. °C | anschl. Veresterung | WS % |
|---|---|---|---|---|---|---|---|---|---|---|---|---|
| C 1 | A 15 | 893 | 95,8 | 453 | 3 h | 80 °C | Essigsäureanhydrid | 14,3 | 3 | 100 | ja | 50 |
| C 2 | A 3 | 579 | 72 | 340 | 3 h | 80 °C | Essigsäureanhydrid | 14,3 | 3 | 100 | ja | 50 |

D) Modifikation der unter B) und C) hergestellten Copolymere

Die nachfolgenden Beispiele sollen nur exemplarisch verdeutlichen, welche Modifikationen an den Polymeren aus B) und C) durchgeführt werden können.

a) Abmischung mit alkoxylierten Alkoholen und/oder Cotensiden

1. 966 g der Lösung des unter B1 hergestellten Copolymers werden mit 61 g des unter a14 alkoxylierten Alkohols und 61 g Xylol abgemischt.

2. 768 g der Lösung des unter B9 hergestellten Copolymers werden mit 128 g Dodecylhydrogensulfat und 1613 g Methanol gemischt.

b) Teilweise Veresterung der unter C) hergestellten Mischungen

50 g der Lösung des Produktes aus B14 werden mit 6,5 g des unter a13 und 6,5 g des unter a14 hergestellten alkoxylierten Alkohols gemischt und zusätzlich noch 52 g Xylol zugegeben. Durch Kochen unter Rückfluß kreist man innerhalb von 4 h 0,8 ml Wasser aus.

c) Nachträgliche Vernetzung der Copolymeren aus B)

50 g der Lösung des Produktes aus B10 werden mit 1 g Bisglycidylether vom Bisphenol-A (Epikote) versetzt und 8 h auf 100 ° C erhitzt. Die zähviskose Lösung wird durch Zugabe von 35 g Xylol verdünnt.

d) Nachträgliche Alkoxylierung der unter B) und C) hergestellten Copolymere mit Ethylenoxyd und/oder Propylenoxyd und/oder Butylenoxyd

100 g der Lösung des unter B7 hergestellten Copolymeren werden mit 1 g Kaliumhydroxyd versetzt und im Autoklav bei 6 bar und 130 bis 140 ° C mit 50 g Propylenoxyd umgesetzt. Nach beendeter Reaktion werden noch 290 g Ethylenoxyd bei 120 bis 130 ° C portionsweise zudosiert. Gegen Ende der Reaktion erhöht man die Temperatur für 2 h auf 150 ° C.

## Patentansprüche

**1.** Als Erdölemulsionsspalter geeignete Reaktionsmischungen, enthaltend Copolymere aus Acrylsäure- oder Methacrylsäureestern und ethylenisch ungesättigten Comonomeren, erhältlich durch

- Copolymerisation von hydrophoben Acrylsäure- oder Methacrylsäureestern, die durch Veresterung von Acrylsäure bzw. Methacrylsäure mit einer Alkoholkomponente aus Polyalkylenglykolen und Polyalkylenglykolethern erhältlich sind, mit hydrophilen ethylenisch ungesättigten Comonomeren
  sowie
- Überführung aller oder nahezu aller freier OH-Gruppen des Copolymers durch Veretherung, Veresterung oder Urethanbildung in eine nicht mehr reaktive Form und/oder Neutralisation der bei den Veresterungen verwendeten Säure durch Aminzusatz.

**2.** Reaktionsmischungen gemäß Anspruch 1, dadurch gekennzeichnet, daß die als Ausgangsstoff dienenden monomeren Acrylsäure- bzw. Methacrylsäureester durch Veresterung, unter Zuhilfenahme eines Schleppmittels zur Entfernung des Wassers, von Acrylsäure bzw. Methacrylsäure mit Alkoxylaten der Formel

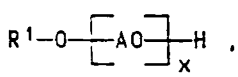

hergestellt sind, in der $R^1$ den Rest eines ein- oder mehrwertigen Alkohols oder Alkylphenols oder den Rest eines Alkylphenol/Formaldehyd- oder Alkylphenol/Acetaldehyd-Kondensationsproduktes, AO ein Ethylenoxid-Propylenoxid- oder 1,2-Butylenoxidrest oder Mischungen dieser Reste oder Blöcke dieser Reste und x die Zahlen 5 bis 120 bedeutet.

**3.** Reaktionsmischungen gemäß Anspruch 1, dadurch gekennzeichnet, daß die freien OH-Gruppen der Copolymere nach der Copolymerisation in Ester oder Urethangruppen überführt sind.

**4.** Reaktionsmischungen gemäß Anspruch 1, dadurch gekennzeichnet, daß die Säure durch Zusatz tert. Amine neutralisiert wird.

**5.** Reaktionsmischungen gemäß Anspruch 1, dadurch gekennzeichnet, daß sie erhalten wurden durch Copolymerisation von

A) hydrophoben Acrylsäureestern oder Methacrylsäureestern, deren Alkoholkomponente aus hydrophoben Alkoxylaten der Formel

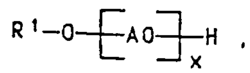

besteht,

in der $R^1$ den Rest eines ein- oder mehrwertigen Alkohols oder Alkylphenols oder den Rest eines Alkylphenol/Formaldehyd- oder Alkylphenol/Acetaldehyd-Kondensationsproduktes, AO ein Ethylenoxid-Propylenoxid oder 1,2-Butylenoxidrest oder Mischungen dieser Reste oder Blöcke dieser Reste und x die Zahlen 5 bis 120 bedeutet,

mit

B) hydrophilen Comonomeren der Formel

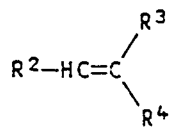

in der

$R^2$ Wasserstoff oder die Reste -COOH, $-COOC_2H_4OH$,$-COOC_2H_4N(C_2H_5)_2$, $-CONH_2$, -CN,

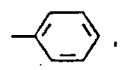

$-OCOCH_3$, $-CH_2OH$, -NHCHO, $-CO_2CH_3$, $-COOC_2H_5$,

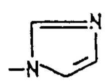 oder 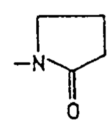

$R^3$ Wasserstoff oder -COOH und

$R^4$ Wasserstoff oder $-CH_3$ bedeuten,

mit der Maßgabe, daß mindestens einer der Reste $R^2$ oder $R^3$ eine hydrophile Gruppe ist,

wobei A) zu B) im Gewichtsverhältnis 300:1 bis 1:50 vorliegt und

C) Überführung der freien OH-Gruppen durch Veretherung, Veresterung oder Urethanbildung in eine nicht mehr reaktive Form und/oder Neutralisation der bei der Herstellung der Ester A) oder bei der Veresterung bei C) als Katalysator verwendeten Säure mit einem tertiären Amin.

**6.** Verfahren zur Herstellung von Reaktionsmischungen gemäß Anspruch 1, dadurch gekennzeichnet, daß man

A) Acrylsäure bzw. Methacrylsäure mit hydrophoben Alkoxylaten der Formel

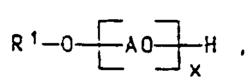

in der $R^1$ den Rest eines ein- oder mehrwertigen Alkohols oder Alkylphenols oder den Rest eines Alkylphenol/Formaldehyd- oder Alkylphenol/Acetaldehyd-Kondensationsproduktes, AO ein Ethylenoxid-Propylenoxid- oder 1,2-Butylenoxidrest oder Mischungen dieser Reste oder Blöcke dieser Reste und x die Zahlen 5 bis 120 bedeutet

in Gegenwart eines sauren Veresterungskatalysators und unter Verwendung von Schleppmitteln verestert und die erhaltenenen Estermonomere mit

B) hydrophilen Comonomeren der Formel

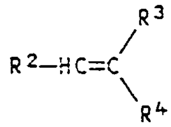

in der

$R^2$ Wasserstoff oder die Reste -COOH, $-COOC_2H_4OH$,$-COOC_2H_4N(C_2H_5)_2$, $-CONH_2$, -CN,

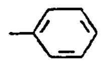 ,

$-OCOCH_3$, $-CH_2OH$, -NHCHO, $-CO_2CH_3$, $-COOC_2H_5$,

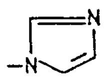 oder 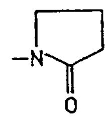

$R^3$ Wasserstoff oder -COOH und

$R^4$ Wasserstoff oder $-CH_3$

bedeutet, wobei mindestens einer der Reste $R^2$ oder $R^3$ eine hydrophile Gruppe darstellt, im Gewichtsverhältnis A) zu B) von 300:1 bis 1:50 in an sich bekannter Weise copolymerisiert und C) noch freie OH-Gruppen verestert, verethert oder in eine Urethangruppierung überführt und/oder die bei der Herstellung gemäß A) oder C) als Katalysator verwendete Säure mit einem Amin neutralisiert.

**7.** Verfahren gemäß Anspruch 6, dadurch gekennzeichnet, daß eine teilweise Veretherung, Veresterung oder Umsetzung mit einem Isocyanat der freien OH-Gruppen schon vor der Copolymerisation vorgenommen worden ist.

**8.** Verwendung von Reaktionsmischungen gemäß Anspruch 1 zur Demulgierung von Wasser enthaltenden Rohölen.

**Claims**

**1.** A reaction mixture containing a copolymer of acrylates or methacrylates and ethylenically unsaturated comonomers and suitable as an oil demulsifier, the said reaction mixture being obtainable by copolymerising hydrophobic acrylates or methacrylates, which are obtainable by esterifying acrylic acid or methacrylic acid with an alcohol component comprising polyalkylene glycols and polyalkylene glycol ethers with hydrophilic ethylenically unsaturated comonomers and
converting all or virtually all free OH groups of the copolymer by etherification, esterification or urethane formation into a non-reactive form and/or neutralizing the acid used in the esterifications by adding an amine.

**2.** A reaction mixture as claimed in claim 1, wherein the monomeric acrylates or methacrylates used as starting materials are prepared with the aid of an entraining agent for removal of water, by esterification of acrylic acid or methacrylic acid with an oxyalkylate of the formula

$$R^1-O-[AO]_x-H ,$$

where $R^1$ is a radical of a monohydric or polyhydric alcohol or alkylphenol or a radical of an alkylphenol/formaldehyde or alkylphenol/acetaldehyde condensate, AO is an ethylene oxide/propylene

oxide or 1,2-butylene oxide radical or a mixture of these radicals or blocks of these radicals, and x is from 5 to 120.

**3.** A reaction mixture as claimed in claim 1, wherein the free OH groups of the copolymers have been converted to ester or urethane groups after the copolymerization.

**4.** A reaction mixture as claimed in claim 1, wherein the acid is neutralized by adding a tertiary amine.

**5.** A reaction mixture as claimed in claim 1, which has been obtained by copolymerizing

A) a hydrophobic acrylate or methacrylate, the alcohol component of which comprises a hydrophobic oxyalkylate of the formula

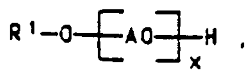

where $R^1$ is a radical of a monohydric or polyhydric alcohol or alkylphenol or a radical of an alkylphenol/formaldehyde or alkylphenol/acetaldehyde condensate, AO is an ethylene oxide/propylene oxide or 1,2-butylene oxide radical or a mixture of these radicals or blocks of these radicals and x is from 5 to 120,

with

B) a hydrophilic comonomer of the formula

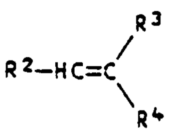

where

$R^2$ is hydrogen, $-COOH$, $-COOC_2H_4OH$, $-COOC_2H_4N(C_2H_5)_2$, $-CONH_2$, $-CN$,

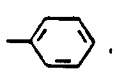

$-OCOCH_3$, $-CH_2OH$, $-NHCHO$, $-CO_2CH_3$, $-COOC_2H_5$,

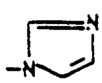 or 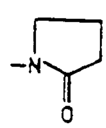

$R^3$ is hydrogen or $-COOH$ and

$R^4$ is hydrogen or $-CH_3$,

with the proviso that one or more of the radicals $R^2$ and $R^3$ is a hydrophilic group, the weight ratio of A) to B) being from 300:1 to 1:50, and

C) converting the free OH groups to an unreactive form by etherificaion, esterification or urethane formation and/or neutralizing the acid used as a catalyst in the preparation of the esters A) or in the esterification in C) with a tertiary amine.

**6.** A process for the preparation of a reaction mixture as claimed in claim 1, wherein

A) acrylic acid or methacrylic acid is esterified with a hydrophobic oxyalkylate of the formula

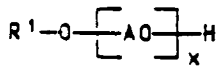 ,

where $R^1$ is a radical of a monohydric or polyhydric alcohol or alkylphenol or a radical of an alkylphenol/formaldehyde or alkylphenol/acetaldehyde condensate, AO is an ethylene oxide/propylene oxide or 1,2-butylene oxide radical or a mixture of these radicals or blocks of these radicals and x is from 5 to 120,

in the presence of an acidic esterification catalyst and using an entraining agent, and the resulting ester monomer is copolymerized with

B) a hydrophilic comonomer of the formula

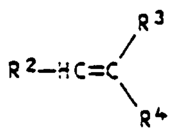

where

$R^2$ is hydrogen, $-COOH$, $-COOC_2H_4OH$, $-COOC_2H_4N(C_2H_5)_2$, $-CONH_2$, $-CN$,

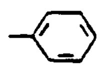 ,

$-OCOCH_3$, $-CH_2OH$, $-NHCHO$, $-CO_2CH_3$, $-COOC_2H_5$,

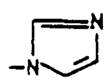 or 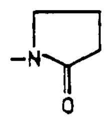

$R^3$ is hydrogen or $-COOH$ and

$R^4$ is hydrogen or $-CH_3$,

one or more of the radicals $R^2$ and $R^3$ being the hydrophilic group,

in a weight ratio of A) to B) of from 300:1 to 1:50, in a conventional manner, and

C) remaining free OH groups are esterified, etherified or converted to urethane groups and/or the acid used as a catalyst in the preparation according to A) or C) is neutralized with an amine.

**7.** A process as claimed in claim 6, wherein partial etherification, esterification or conversion with an isocyanate of the free OH groups has been carried out prior to copolymerization.

**8.** Use of a reaction mixture as claimed in claim 1 for the demulsification of a water-containing crude oil.

## Revendications

**1.** Mélanges réactionnels convenant comme agents désémulsionnants pour pétrole brut, contenant des copolymères d'esters d'acide acrylique ou d'acide méthacrylique et de comonomères à insaturation éthylénique, obtenus par

- copolymérisation d'esters hydrophobes d'acide acrylique ou d'acide méthacrylique, qui ont été obtenus par estérification d'acide acrylique ou d'acide méthacrylique par un composant alcool choisi parmi les polyalkylèneglycols et les poly(oxydes d'alkylèneglycols), avec des comonomères hydrophiles à insaturation éthylénique, et par
- transformation de tous ou presque tous les groupements OH libres du copolymère, par éthérification, estérification ou formation d'uréthanne, en une forme qui n'est plus réactive et/ou neutralisation, par addition d'amine, de l'acide utilisé dans les estérifications.

**2.** Mélanges réactionnels selon la revendication 1, caractérisés en ce que les esters d'acide acrylique ou

d'acide méthacrylique monomères, servant de substance de départ, sont préparés par estérification, en faisant appel à un produit d'entraînement pour l'élimination de l'eau, d'acide acrylique ou d'acide méthacrylique par des alcoxylates de formule

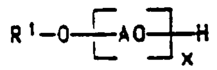 ,

dans laquelle $R^1$ représente le reste d'un mono- ou poly-alcool ou -alkylphénol ou le reste d'un produit de condensation alkylphénol/formaldéhyde ou alkylphénol/acétaldéhyde, AO représente un reste oxyde d'éthylèneoxyde de propylène ou oxyde de 1,2-butylène, des mélanges de ces restes ou des séquences de ces restes, et x est mis pour un nombre de 5 à 120.

3. Mélanges réactionnels selon la revendication 1, caractérisés en ce qu'après la copolymérisation, les groupements OH libres des copolymères sont transformés en groupements ester ou uréthanne.

4. Mélanges réactionnels selon la revendication 1, caractérisés en ce que l'acide est neutralisé par addition d'amine tertiaire.

5. Mélanges réactionnels selon la revendication 1, caractérisés en ce qu'ils ont été obtenus par copolymérisation

A) d'esters hydrophobes d'acide acrylique ou d'acide méthacrylique dont le composant alcool est constitué par des alcoxylates hydrophobes de formule

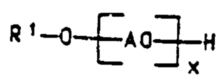 ,

dans laquelle $R^1$ représente le reste d'un mono- ou poly-alcool ou -alkylphénol ou le reste d'un produit de condensation alkylphénol/formaldéhyde ou alkylphénol/acétaldéhyde, AO représente un reste oxyde d'éthylène-oxyde de propylène ou oxyde de 1,2-butylène, des mélanges de ces restes ou des séquences de ces restes, et x est mis pour un nombre de 5 à 120,

avec

B) des comonomères hydrophiles de formule

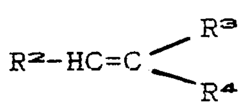

dans laquelle

$R^2$ représente un atome d'hydrogène ou les restes -COOH, $-COOC_2H_4OH$, $-COOC_2H_4N(C_2H_5)_2$, $-CONH_2$, -CN,

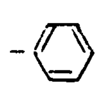 ,

$-OCOCH_3$, $-CH_2OH$, -NHCHO, $-CO_2CH_3$, $-COOC_2H_5$,

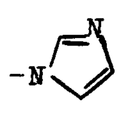 ou 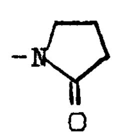

$R^3$ représente un atome d'hydrogène ou le reste -COOH et
$R^4$ représente un atome d'hydrogène ou le reste $-CH_3$,
étant spécifié que l'un au moins des restes $R^2$ et $R^3$ est un groupement hydrophile,
A) étant à B) dans un rapport pondéral de 300:1 à 1:50, et
C) transformation des groupements OH libres, par éthérification, estérification ou formation d'uréthanne, en une forme qui n'est plus réactive et/ou neutralisation, par une amine tertiaire, de l'acide utilisé comme catalyseur dans la préparation de l'ester A) ou dans l'estérification en C).

**6.** Procédé de préparation de mélanges réactionnels selon la revendication 1, caractérisé en ce que
A) on estérifie de l'acide acrylique ou de l'acide méthacrylique par des alcoxylates hydrophobes de formule

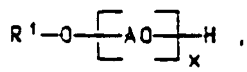

dans laquelle $R^1$ représente le reste d'un mono- ou poly-alcool ou -alkylphénol ou le reste d'un produit de condensation alkylphénol/formaldéhyde ou alkylphénol/acétaldéhyde, AO représente un reste oxyde d'éthylène-oxyde de propylène ou oxyde de 1,2-butylène, des mélanges de ces restes ou des séquences de ces restes, et x est mis pour un nombre de 5 à 120,
en présence d'un catalyseur d'estérification acide et avec utilisation de produits d'entraînement,
on copolymérise, de façon connue en soi, les esters monomères ainsi obtenus avec
B) des comonomères hydrophiles de formule

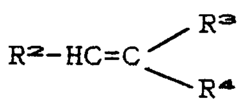

dans laquelle
$R^2$ représente un atome d'hydrogène ou les restes -COOH, $-COOC_2H_4OH$, $-COOC_2H_4N(C_2H_5)_2$, $-CONH_2$, -CN,

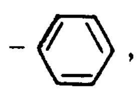

$-OCOH_3$, $-CH_2OH$, -NHCHO, $-CO_2CH_3$, $-COOC_2H_5$,

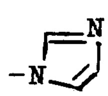

ou

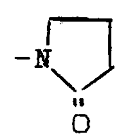

$R^3$ représente un atome d'hydrogène ou le reste -COOH et
$R^4$ représente un atome d'hydrogène ou le reste $-CH_3$,
l'un au moins des restes $R^2$ et $R^3$ étant un groupement hydrophile,
dans un rapport pondéral de A) à B) de 300:1 à 1:50, et
C) on estérifie, éthérifie ou transforme en un groupement uréthanne les groupements OH encore libres et/ou
on neutralise avec une amine l'acide utilisé comme catalyseur dans la préparation en A) ou en C).

**7.** Procédé selon la revendication 6, caractérisé en ce qu'une éthérification, une estérification ou une transformation par un isocyanate des groupements OH libres a déjà été effectuée de façon partielle avant la copolymérisation.

8. Utilisation de mélanges réactionnels selon la revendication 1 pour la désémulsification de pétroles bruts contenant de l'eau.